# EUROPÄISCHE PATENTANMELDUNG

(11) **EP 4 620 922 A1**
(43) Veröffentlichungstag der Anmeldung: **24.09.2025**
(21) Anmeldenummer: 24164656.1
(22) Anmeldetag: 19.03.2024
(51) Int. Cl.: C02F 1/32

(54) **UV-WASSERENTKEIMUNGSREAKTOR UND VORRICHTUNG ZUR WASSERDESINFEKTION MITTELS UV-STRAHLUNG**

(71) Anmelder: Peschl Ultraviolet GmbH, 55130 Mainz (DE)
(72) Erfinder: Peschl, Alexander, 55130 Mainz (DE)
(74) Vertreter: mepat Patentanwälte

(57) **Zusammenfassung**

Die vorliegende Erfindung stellt einen UV-Wasserentkeimungsreaktor (1) zur Anordnung in einem Wasserbehälter (101) und eine daraus gebildete Vorrichtung (100) bereit. Der UV-Wasserentkeimungsreaktor (1) hat ein für die UV-Strahlung undurchlässiges Reaktorgehäuse, das durch ein Pumpengehäuse (2) mit einem Reaktoreinlass (1a) und ein Strahlergehäuse (13) mit einem Reaktorauslass (1b) gebildet wird. In dem Pumpengehäuse (2) ist eine Pumpe (3) und in dem Strahlergehäuse (13) ist ein UV-Strahler (10) angeordnet. Ein Pumpenhalter (5) ist abdichtend in dem Pumpengehäuse (2) angeordnet und weist einen Halteabschnitt (50) auf, an dem die Pumpe (3) mit ihrem Pumpenauslass (31) befestigt ist. Der Halteabschnitt (50) verbindet den Pumpenauslass (31) mit einer Durchtrittsöffnung (51), die sich durch den Pumpenhalter (5) von dem Halteabschnitt (50) mit verjüngendem Querschnitt erstreckt. Ein Strahlerhalter (6) ist mit dem Pumpenhalter (5) und dem Strahlergehäuse (13) verbunden und weist einen Anschlusssockel (63) für den UV-Strahler (10) und zumindest eine Durchtrittsöffnung (61) auf, die mit der Durchtrittsöffnung (51) des Pumpenhalters (5) in Verbindung steht. Die Pumpe (3) und der UV-Strahler (10) sind zum Betrieb mit Schutzkleinspannung ausgebildet.

## Beschreibung

Die Erfindung betrifft einen UV-Wasserentkeimungsreaktor und eine damit gebildete Vorrichtung zur Wasserdesinfektion bzw. Entkeimung von Wasser durch Behandlung mit ultravioletter (UV-)Strahlung.

Aus dem Stand der Technik ist bekannt, ultraviolette Strahlung zur Desinfizierung bzw. Entkeimung von Wasser einzusetzen. Dabei ist Wasser für UV-Strahlung im Wellenlängenbereich von 100 bis 300 nm (UVC-Strahlung) weitgehend transparent, durch die Viren, Bakterien, Hefen und Pilze inaktiviert werden, indem die UV-Strahlung von der DNA der Mikroorganismen absorbiert wird. Häufig werden in Vorrichtungen zur UV-Desinfizierung Quecksilberdampf-Niederdruckstrahler eingesetzt, die UV-Strahlung mit einer Wellenlänge von 254 nm emittieren. Üblicherweise werden die UV-Strahler in einen Wasserbehälter eingehängt. Alternativ kann ein UV-Strahler in einer mit einem Wasserbehälter verbundenen Bypassleitung angeordnet sein, durch die das Wasser aus dem Behälter umgewälzt wird.

EP 2 829 519 B1, beschreibt einen in einem Wasserbehälter versenkbaren UV-Wasserentkeimungsreaktor, der eine längliche Reaktorkammer mit einem Ein- und Auslass an den Enden aufweist. In der Reaktorkammer sind ein UVC-UV-Strahler und eine Pumpe angeordnet, die das zu entkeimende Wasser in linearer Weise durch die Reaktorkammer pumpt. Eine außerhalt des Wasserbehälters vorgesehene Steuerungseinheit ist über eine wasserdichte Kabelleitung mit dem UV-Strahler und der Pumpe verbunden. Die Reaktorkammer besteht aus einem für UVC-Strahlung durchlässigen Quarzglasgehäuse, so dass nicht nur das durch die Reaktorkammer gepumpte Wasser entkeimt wird, sondern die UVC-Strahlung auch aus der Reaktorkammer austritt, um auch den Innenraum des Wasserbehälters zu entkeimen.

Hierbei besteht allerdings ein erhöhtes UV-Expositionsrisiko von Personen, z. B. bei offenen Wasserbehältern oder bei Wasserbehältern aus einem Kunststoff, der die UV-Strahlung nicht vollständig absorbiert. Bei Wasserbehältern aus Kunststoff besteht außerdem das Risiko einer verstärkten Alterung aufgrund der UV-Exposition. Und da gängige UV-Strahlungsquellen zumeist auch Strahlung im sichtbaren und längerwelligen UV-Bereich emittieren, deren Eindringtiefe in Wasser deutlich größer ist als die der UVC-Strahlung, wird dadurch eine Biofilmbildung, z. B. durch Algen, im Wasserbehälter eher gefördert als unterdrückt.

DE 20 1007 000 031 U1 beschreibt einen ähnlichen UV-Wasserentkeimungsreaktor, der allerdings eine Reaktorkammer aus Stahl mit einer reflektierenden Innenoberfläche aufweist, um vor unbeabsichtigter UV-Exposition zu schützen. Dazu sind Ein- und Auslass an den Enden der Reaktorkammer mit einer Lichtfalle aus mehreren V-förmigen Blechen versehen.

Durch diese Lichtfallen kann aber die Strömung in die und aus der Reaktorkammer nachteilig beeinflusst z. B. uneinheitlicher, verengt und/oder beschleunigt werden. Außerdem muss der dadurch bedingte Druckverlust durch eine erhöhte Pumpenleistung ausgeglichen werden, um einen vorbestimmten Volumenstrom durch die Reaktorkammer zu erzielen.

Ausgehend von diesem Stand der Technik ist es Aufgabe der vorliegenden Erfindung, einen verbesserten UV-Wasserentkeimungsreaktor bereitzustellen.

Diese Aufgabe wird durch einen UV-Wasserentkeimungsreaktor mit den Merkmalen des Anspruchs 1 gelöst.

Weiterbildungen bzw. bevorzugte Ausführungsformen sind in den Unteransprüchen ausgeführt.

Die weitere Aufgabe, eine entsprechend verbesserte Vorrichtung zur Wasserdesinfektion bereitzustellen, wird durch die Vorrichtung mit den Merkmalen des unabhängigen Anspruchs 12 gelöst.

Gemäß einer ersten Ausführungsform weist ein erfindungsgemäßer UV-Wasserentkeimungsreaktor, der zur Anordnung in einem Wasserbehälter ausgebildet ist, ein längliches, für die UV-Strahlung undurchlässiges Reaktorgehäuse mit einem Reaktoreinlass und einem Reaktorauslass auf. In dem Reaktorgehäuse sind eine Pumpe und ein UV-Strahler angeordnet, der UV-Strahlung in einem UVC-Wellenlängenbereich emittiert. Das Reaktorgehäuse wird entlang seiner Längsachse durch ein Pumpengehäuse und ein Strahlergehäuse gebildet. Dabei weist das Pumpengehäuse, in dem die Pumpe angeordnet ist, den Reaktoreinlass und das Strahlergehäuse, in dem der UV-Strahler angeordnet ist, den Reaktorauslass auf. Zur Verbindung des Pumpengehäuses und des Strahlergehäuses und zur Bereitstellung des Strömungswegs von der Pumpe zu dem UV-Strahler weist UV-Wasserentkeimungsreaktor einen Pumpenhalter und einen Strahlerhalter auf. Der Pumpenhalter ist abdichtend in dem Pumpengehäuse angeordnet und hat einen Halteabschnitt, an dem die Pumpe mit ihrem Pumpenauslass befestigt ist. Der Halteabschnitt verbindet den Pumpenauslass mit einer Durchtrittsöffnung, die sich durch den Pumpenhalter von dem Halteabschnitt mit verjüngendem Querschnitt erstreckt. Der Strahlerhalter, der mit dem Pumpenhalter und dem Strahlergehäuse verbunden ist, weist einen Anschlusssockel für den UV-Strahler und zumindest eine Durchtrittsöffnung aufweist, die mit der Durchtrittsöffnung des Pumpenhalters in Verbindung steht. Dabei sind die Pumpe und der UV-Strahler zum Betrieb mit Schutzkleinspannung ausgebildet, sodass im Zusammenwirken mit der Erdung von nicht betriebsmäßig unter Spannung stehenden, leitfähigen Bauteile kein Risiko eines lebensbedrohlichen elektrischen Schlags zumindest für erwachsene gesunde Menschen besteht.

Betrieb mit Schutzkleinspannung bedeutet, dass die Versorgungsspannung der Pumpe und des UV-Strahlers 50 V Wechselspannung nicht überschreitet. Der Betrieb mit Schutzkleinspannung wird durch die definierte Gestaltung des Strömungswegs von der Pumpe zu dem UV-Strahler ermöglicht. Dafür sorgt die Verbindung von Strahlerhalter und Pumpenhalter, durch die das Strahlergehäuse an das Pumpengehäuse angeschlossen und so das Reaktorgehäuse bereitgestellt wird. Der UV-Wasserentkeimungsreaktor ist damit aus einer Pumpeneinheit, die das Pumpengehäuse, die Pumpe und den Pumpenhalter aufweist, und einer Strahlereinheit aufgebaut, die das Strahlergehäuse, den UV-Strahler und den Strahlerhalter aufweist.

Vorliegend sind die verwendeten Bezeichnungen "Reaktoreinlass" am Pumpengehäuse und "Reaktorauslass" am Strahlergehäuse auf eine bevorzugte Strömungsrichtung der Pumpe von dem Pumpengehäuse in das Strahlergehäuse bezogen, sodass die Pumpe stromaufwärts des UV-Strahlers liegt. Grundsätzlich ist aber auch der Einsatz einer Pumpe in umgekehrter Strömungsrichtung von dem Strahlergehäuse in das Pumpengehäuse möglich, wobei die Pumpe stromabwärts des UV-Stahlers liegt. Dann wird das Wasser durch die als "Reaktorauslass" bezeichnete Systemöffnung am Strahlergehäuse angesaugt und durch die als "Reaktoreinlass" bezeichnete Systemöffnung an dem Pumpengehäuse ausgegeben. Es ist auch möglich, eine Pumpe mit änderbarer Drehrichtung einzusetzen, sodass die Strömungsrichtung durch das Reaktorgehäuse gewechselt werden kann. Werden in der vorliegenden Beschreibung auf Strömungsrichtung oder Strömungsweg adressiert, bezieht sich dies auf die bevorzugte Strömungsrichtung von dem Pumpengehäuse in das Strahlergehäuse, wenn nichts anderes angegeben ist. Entsprechende Änderungen, die sich bei umgekehrter Strömungsrichtung ergeben, sind für den Fachmann offensichtlich.

Nach einer weiteren Ausführungsform des erfindungsgemäßen UV-Wasserentkeimungsreaktors wird der Reaktoreinlass, der mit einem Pumpeneinlass der Pumpe in Verbindung steht, durch mehrere umfänglich verteilte Einlassschlitze im Pumpengehäuse gebildet. Diese Einlassschlitze sind an dem Pumpengehäuse neben einem Pumpenhalterabschnitt ausgebildet, in dem der Pumpenhalter abdichtend aufgenommen ist. Stirnseitig ist das Pumpengehäuse durch eine Abdeckkappe verschlossen, die zumindest eine Anschlussvorrichtung für den elektrischen und kommunikativen Anschluss der Pumpe und des UV-Strahlers aufweist. Die zumindest eine Anschlussvorrichtung ist dazu mit zumindest einer Anschlussleitung verbunden, die die Pumpe und den UV-Strahler elektrisch und kommunikativ mit zumindest einer Steuerungseinheit verbindet.

Dazu können etwa zwei Anschlussvorrichtungen als Durchführung für zwei Anschlussleitungen vorgesehen sein, jeweils eine für die Pumpe und eine für den UV-Strahler.

Gemäß einer weiteren Ausführungsform des erfindungsgemäßen UV-Wasserentkeimungsreaktors weist der Pumpenhalter neben dem Halteabschnitt eine Leitungsdurchführung für den elektrischen und kommunikativen Anschluss des UV-Strahlers auf. Dazu erstreckt sich durch die Leitungsdurchführung abdichtend eine Anschlussleitung, um eine Strömungsseparation durch die Leitungsdurchführung zu verhindern. Im Weiteren umgibt der Anschlusssockel eine Aufnahmebohrung, die sich durch den Strahlerhalter erstreckt. Diese Aufnahmebohrung ist auf der zu dem Pumpenhalter weisenden Seite durch eine Anschlussvorrichtung verschlossen, die mit der Anschlussleitung für den elektrischen und kommunikativen Anschluss des UV-Strahlers verbunden ist. Die abdichtende Anordnung der Anschlussvorrichtung mit der Anschlussleitung in der Aufnahmebohrung dient der Abdichtung des UV-Strahlers und vermeidet Strömungsseparation.

Nach noch einer weiteren Ausführungsform des erfindungsgemäßen UV-Wasserentkeimungsreaktors weist der Strahlerhalter zur Verbindung mit dem Pumpenhalter einen Flanschabschnitt und zur Verbindung mit dem Strahlergehäuse einen Stutzenabschnitt auf. Der Stutzenabschnitt, durch den sich die zumindest eine Durchtrittsöffnung erstreckt, ist von dem Flanschabschnitt abgesetzt, wobei der Anschlusssockel an dem Stutzenabschnitt abgesetzt ausgebildet ist. Die zumindest eine Durchtrittsöffnung mündet so in einen zwischen Strahlergehäuse und UV-Strahler gebildeten Zwischenraum, sodass ein zu desinfizierender Wasserstrom definiert in das Strahlergehäuse zur Passage entlang dem UV-Strahler geleitet wird.

Ferner kann nach einer weiteren Ausführungsform des erfindungsgemäßen UV-Wasserentkeimungsreaktor der UV-Strahler in einem einseitig geschlossenen Tauchrohr aus einem für die UVC-Strahlung durchlässigen Material, z. B. Quarzglas, angeordnet sein. Ein offenes Ende des Tauchrohrs ist in die Aufnahmebohrung des Anschlusssockels aufgenommen. Dabei ist das Tauchrohr durch ein mit dem Anschlusssockel eingreifendes Befestigungselement an dem Strahlerhalter befestigt. Das Tauchrohr separiert den UV-Strahler von dem zwischen Strahlergehäuse und UV-Strahler gebildeten Zwischenraum, sodass ein direkter Wasserkontakt des UV-Strahlers unterbunden wird. Damit werden Verschmutzungen der Strahleroberfläche durch Wasserinhaltsstoffe vermieden und Kurzschlüsse an dem elektrischen Anschluss des UV-Strahlers verhindert.

Nach einer weiteren Ausführungsform des erfindungsgemäßen UV-Wasserentkeimungsreaktors wird der Reaktorauslass stirnseitig durch eine Mehrzahl von Auslassöffnungen an einem von dem Strahlerhalter abgewandten Austrittsende des Strahlergehäuses gebildet. Die Auslassöffnungen sind hinsichtlich ihrer Größe und Anordnung dazu ausgebildet, eine durch den Reaktorauslass austretende Strömung zu regulieren. Beispielsweise können die Auslassöffnungen in einem Deckeleinsatz ausgebildet sein, der stirnseitig an dem Austrittsende des Strahlergehäuses angeordnet ist. Durch die Anordnung der Auslassöffnungen kann die austretende Strömung beispielsweise vereinheitlicht, verbreitert und/ oder verlangsamt werden.

Ferner kann der erfindungsgemäße UV-Wasserentkeimungsreaktor nach einer weiteren Ausführungsform zur Erhöhung der Turbulenz und/oder der Verweilzeit in dem Strahlergehäuse zusätzlich zumindest ein Strömungsleitelement in dem Strahlergehäuse und/ oder dem Strahlerhalter aufweisen. Bezogen auf die bevorzugte Strömungsrichtung von dem Pumpengehäuse in das Strahlergehäuse ist das zumindest eine Strömungsleitelement stromabwärts der Pumpe angeordnet. Beispielsweise kann ein Strömungsleitelement in der Durchtrittsöffnung des Strahlerhalters ausgebildet, um die Strömung bei Eintritt in das Strahlergehäuses zu modifizieren. Alternativ oder zusätzlich kann ein Strömungsleitelement in dem Strahlergehäuse um den UV-Strahler angeordnet sein, um die die Strömung dort zu beeinflussen. Dabei kann es sich bei dem Strömungsleitelement beispielsweise um Leitbleche an der Innenseite des Strahlergehäuses und/oder an der Außenseite des Tauchrohrs handeln. Eine Reduktion der Bestrahlungsstärke wird durch entsprechende Materialwahl und/oder Anordnung des Strömungsleitelements in dem Strahlergehäuse vermieden. Bei umgekehrter Strömungsrichtung befindet sich das zumindest eine Strömungsleitelement stromaufwärts der Pumpe, wobei die als "Reaktorauslass" bezeichnete Systemöffnung zur Modifikation der Strömung bei Eintritt in das Strahlergehäuse ausgebildet sein kann.

Gemäß einer weiteren Ausführungsform des erfindungsgemäßen UV-Wasserentkeimungsreaktors hat der erfindungsgemäße UV-Wasserentkeimungsreaktor stromaufwärts der Pumpe und des UV-Strahlers einen Partikelfilter. Damit wird verhindert, dass Partikel in die Pumpe und den Bestrahlungsraum gelangen. So sorgt der Partikelfilter dafür, dass die Pumpenfunktion und die Bestrahlungseffizient nicht durch Partikel beeinträchtig werden. Überdies wird durch das Herausfiltern von Partikeln die Qualität des mit dem UV-Wasserentkeimungsreaktor behandelten Wassers verbessert.

Nach noch einer weiteren Ausführungsform des erfindungsgemäßen UV-Wasserentkeimungsreaktors besteht das Strahlergehäuse aus einem reflektierenden Material oder weist an seiner Innenseite eine Reflektorbeschichtung auf. Damit wird die UVC-Strahlung, die den Bestrahlungsraum durchdrungen hat, in den Bestrahlungsraum zurückgelenkt, um desinfizierend zu wirken. Mit einer Reflektorbeschichtung (Beschichtung aus reflektierendem Material) kann das Strahlergehäuse aus einem Material bestehen, das für die UVC-Strahlung zumindest teilweise transparent ist. Als reflektierende Materialen sind in erster Linie Metallmaterialien wie beispielsweise nicht rostender Stahl, Edelstahl, ggf. aber auch pigmentierte Kunststoffmaterialien geeignet.

So kann ein erfindungsgemäßer UV-Wasserentkeimungsreaktor, der in einer Ausführungsform zur Trinkwasserdesinfektion ausgebildet ist, trinkwasserkompatible Materialen aufweisen, und ein anderer erfindungsgemäßer UV-Wasserentkeimungsreaktor, in einer alternativen Ausführungsform zur Prozesswasserdesinfektion in der Halbleiterindustrie ausgebildet ist, metallfrei ausgebildet sein.

Ferner beziehen sich weitere Ausführungsformen des erfindungsgemäßen UV-Wasserentkeimungsreaktors darauf, dass das Tauchrohr eine Splitterschutzbeschichtung oder Splitterschutzhülle aus einem für die UVC-Strahlung transparenten Material aufweist, und/oder in dem Strahlergehäuse eine mechanische Wischvorrichtung integriert ist, die zur Reinigung einer Außenseite des Tauchrohrs ausgebildet ist. Während ein Splitterschutz dazu dient, die Sicherheit des Anwenders zu verbessern, indem der Austritt von Glassplittern aus dem UV-Wasserentkeimungsreaktor bei Bruch des Tauchrohrs verhindert wird, sorgt eine Wischvorrichtung dafür, dass die Entkeimungseffizient nicht durch eine Filmbildung an der Tauchrohroberfläche verringert wird.

Nach einer weiteren Ausführungsformen des erfindungsgemäßen UV-Wasserentkeimungsreaktors kann der UV-Strahler, der eine Mindestdosis von 250 J/m² bereitstellt, eine Amalgamlampe, eine Niederdruck-Quecksilberdampflampe, oder ein Lampenmodul mit mehreren LEDs sein.

Zur weiteren Verbesserung der Effizienz kann vorgesehen sein, dass die Steuerungseinheit des erfindungsgemäßen UV-Wasserentkeimungsreaktors nach einer weiteren Ausführungsform einen Timer aufweisen, der dazu ausgebildet ist, nach Ablauf einer vorbestimmten Betriebsdauer an einen Austausch des UV-Strahlers zu erinnern. Unter der Bezeichnung Timer wird vorliegend ein Steuermodul verstanden, das als eine Ablauf-Zeitschaltuhr konzipiert sein kann, auf der eine vorbestimmte Betriebsdauer eingestellt ist, die mit dem Betrieb des UV-Strahlers heruntergezählt wird, sodass die Erinnerung ausgegeben wird, wenn die Ablauf-Zeitschaltuhr 0 (oder einen anderen vorgegeben Restwert) erreicht. Alternativ dazu kann der Timer ein Steuerungsmodul sein, in dem die vorbestimmte Betriebsdauer hinterlegt ist und das mit dem Betrieb des UV-Strahlers angefangen von 0 aufwärts zählt, sodass die Erinnerung bei Erreichen der hinterlegten Betriebsdauer ausgegeben wird.

Alternativ oder zusätzlich kann die Steuerungseinheit des erfindungsgemäßen UV-Wasserentkeimungsreaktors nach einer weiteren Ausführungsform mit zumindest einem Sensor zur Erfassung eines Betriebsparameters kommunikativ verbunden sein. Insbesondere kann die Steuerungseinheit dazu ausgebildet sein, einen Betrieb der Pumpe und/oder des UV-Strahlers in Abhängigkeit des erfassten Betriebsparameters anzupassen. Dazu ist der Sensor aus einer Gruppe ausgewählt, die zumindest einen Füllstandsensor zur Erfassung eines Füllstands in dem Wasserbehälter, einen UV-Sensor zur Erfassung einer UV-Strahlungsleistung des UV-Strahlers und einen Temperatursensor zur Erfassung der Wassertemperatur umfasst. Dabei ist der Füllstandsensor dazu ausgebildet, in dem Wasserbehälter getrennt von dem Reaktorgehäuse angeordnet zu werden, während der UV-Sensor in dem Strahlergehäuse angeordnet ist, und der Temperatursensor in oder an dem Reaktorgehäuse vorliegt.

Eine erfindungsgemäße Vorrichtung zur Wasserdesinfektion mit UV-Strahlung weist nach einer ersten Ausführungsform einen Wasserbehälter und zumindest einen darin angeordneten UV-Wasserentkeimungsreaktor auf. Der UV-Wasserentkeimungsreaktor hat ein längliches, für die UV-Strahlung undurchlässiges Reaktorgehäuse mit einem Reaktoreinlass und einem Reaktorauslass. In dem Reaktorgehäuse weist der UV-Wasserentkeimungsreaktor eine Pumpe und einen UV-Strahler auf, der UV-Strahlung in einem UVC-Wellenlängenbereich emittiert. Eine mit der Pumpe und dem UV-Strahler verbundene Steuerungseinheit des UV-Wasserentkeimungsreaktors ist außerhalb des Wasserbehälters angeordnet. Erfindungsgemäß ist der UV-Wasserentkeimungsreaktor der Vorrichtung ein erfindungsgemäßer UV-Wasserentkeimungsreaktor nach zumindest einem der der vorbeschriebenen Ausführungsformen.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine perspektivische Ansicht eines erfindungsgemäßen UV-Wasserentkeimungsreaktors,
- **Fig. 2**: eine weitere perspektivische Ansicht des UV-Wasserentkeimungsreaktors aus Fig. 1 ohne Strahlergehäuse,
- **Fig. 3**: eine schematische Darstellung einer erfindungsgemäßen Vorrichtung zur Wasserdesinfektion mit dem UV-Wasserentkeimungsreaktor aus Fig. 1,
- **Fig. 4**: eine Längsschnittansicht des UV-Wasserentkeimungsreaktors aus Fig. 1,
- **Fig. 5**: eine perspektivische Explosionsansicht der Bestrahlungseinheit des UV-Wasserentkeimungsreaktors aus Fig. 1,
- **Fig. 6**: eine perspektivische Detailansicht des Strahlerhalters,
- **Fig. 7**: eine perspektivische Explosionsansicht der Pumpeneinheit des UV-Wasserentkeimungsreaktors aus Fig. 1,
- **Fig. 8**: eine Längsschnittansicht einer weiteren Ausführungsform des UV-Wasserentkeimungsreaktors aus Fig. 1,
- **Fig. 9**: eine Längsschnittansicht einer weiteren Ausführungsform des UV-Wasserentkeimungsreaktors aus Fig. 1,
- **Fig. 10**: eine Längsschnittansicht einer weiteren Ausführungsform des UV-Wasserentkeimungsreaktors aus Fig. 1.

Die Erfindung betrifft einen UV-Wasserentkeimungsreaktor 1 und eine Vorrichtung 100 zur Wasserdesinfektion, die einen Wasserbehälter 101 und zumindest einen in dem Wasserbehälter 101 angeordneten UV-Wasserentkeimungsreaktor 1 aufweist.

Der in den Figuren dargestellte UV-Wasserentkeimungsreaktor 1 weist entlang seiner Längsachse L ein Pumpengehäuse 2 mit Reaktoreinlass 1a und ein Strahlergehäuse 13 mit Reaktorauslass 1b auf, das mit dem Pumpengehäuse 2 verbunden ist. In dem beispielsweise aus einem Stahlmaterial gefertigten Pumpengehäuse 2 ist eine Pumpe 3 angeordnet, um Wasser durch das Strahlergehäuse 13 zu pumpen, in dem ein UV-Strahler 10 in einem Tauchrohr 11 aus UV-C durchlässigem Quarzglas koaxial angeordnet ist.

Zum Schutz vor UV-Exposition ist das Strahlergehäuse 13 aus einem für die UV-Strahlung undurchlässigen Material, z. B. ebenfalls Stahlmaterial, gefertigt. Als UV-Strahler 10 kann jede Lampe eingesetzt werden, die UVC-Strahlung mit einer Mindestdosis von 250 J/m² bereitstellt. Beispiele dafür umfassen Amalgamlampen, Niederdruck-Quecksilberdampflampen oder auch LED-Lampenmodule.

Der Strömungspfad durch den UV-Wasserentkeimungsreaktor 1 verläuft in der bevorzugten Strömungsrichtung der Pumpe 3 von dem Reaktoreinlass 1a zu der Pumpe 3 in dem Pumpengehäuse 2, durch das Strahlergehäuse 13 entlang dem Tauchrohr 11 mit dem UV-Strahler 10 zu dem Reaktorauslass 1b. Für eine optimierte Strömungsführung ist sowohl das Strahlergehäuse 13 als auch das Pumpengehäuse 2 zylindrisch ausgeführt, wobei der Durchmesser des Strahlergehäuses 13 kleiner ist als der Durchmesser des Pumpengehäuses 2. Zur Kopplung des Pumpengehäuses 2 und des Strahlergehäuses 13 und zur Gestaltung des Strömungspfads von der Pumpe 3 in das Strahlergehäuse 13 weist der UV-Wasserentkeimungsreaktor 1 einen Pumpenhalter 5 und einen Strahlerhalter 6 auf.

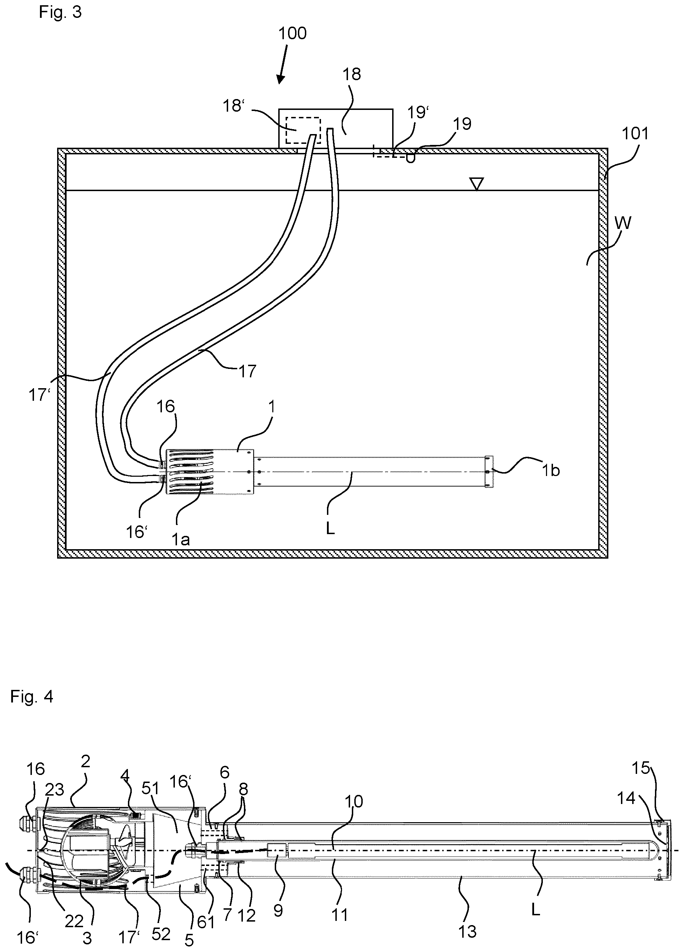

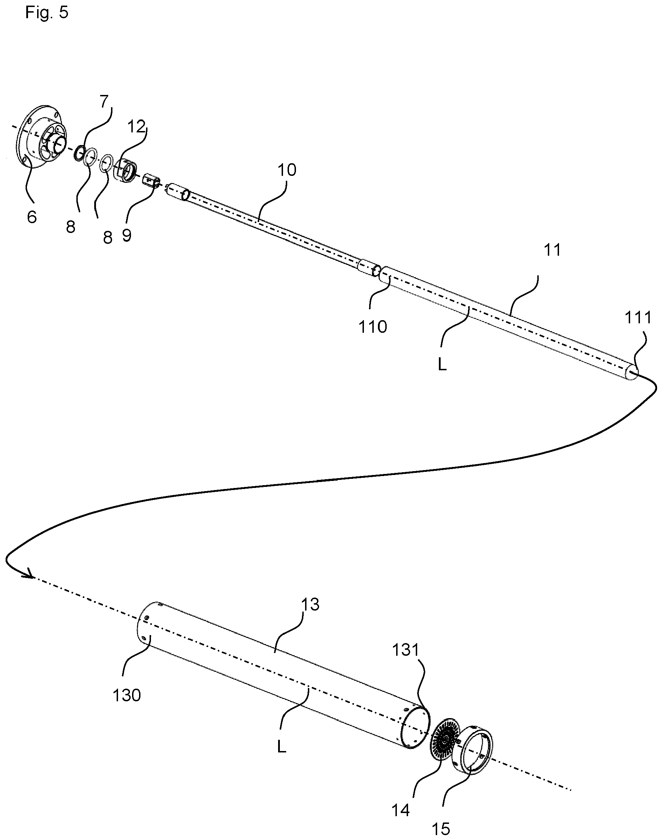

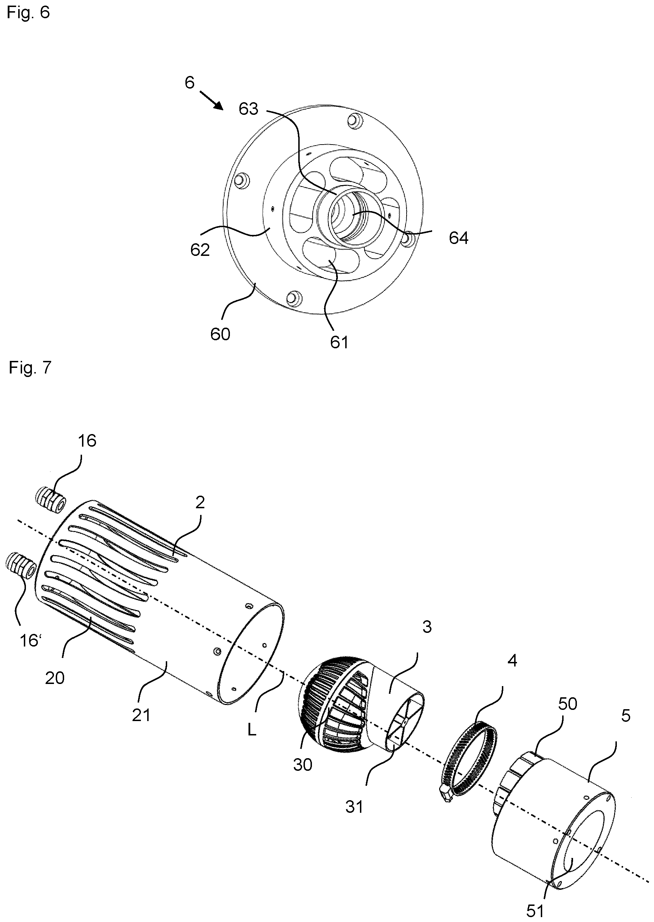

**Fig. 7** zeigt den Pumpenhalter 5 in Explosionsansicht mit dem Pumpengehäuse 2 und der Pumpe 3, die hier zusammen auch als Pumpeneinheit bezeichnet werden. Analog dazu umfasst eine in **Fig. 5** abgebildete Strahlereinheit den Strahlerhalter 6, den UV-Strahler 10, das Tauchrohr 11 und das Strahlergehäuse 13. Der Strahlerhalter 6 ist ferner vergrö-ßert in **Fig. 6** dargestellt. Die Verbindung von Pumpenhalter 5 und Strahlerhalter 6 zur Kopplung des Pumpengehäuses 2 und des Strahlergehäuses 13 ist in der Schnittdarstellung von **Fig. 4** zu sehen.

Der Pumpenhalter 5 ist zum einen zur abdichtenden Anordnung in dem Pumpengehäuse 2 zylindrisch geformt und weist zum anderen einem Halteabschnitt 50 auf, der zur Verbindung mit einem Pumpenauslass 31 der Pumpe 3 gestaltet ist. Dazu kann der Pumpenhalter 5 vorzugsweise aus einem thermoplastischen Kunststoff wie z. B. copolymerem Polyoxymethylen gefertigt sein, der vorteilhaft Eigenschaften wie Federvermögen, hohe elektrische Durchschlagfestigkeit und niedrigen dielektrischen Verlustfaktor mit guter Chemikalienbeständigkeit verbindet.

Vorliegend ist der Halteabschnitt 50 wie der Pumpenauslass 31 hohlzylindrisch geformt und erstreckt sich exzentrisch parallel in Bezug auf die Längsachse L. Der Pumpenauslass 31 ist in dem Halteabschnitt 50 aufgenommen und wird im gezeigten Beispiel mit einer Schlauchschelle 4 befestigt. Alternative Befestigungsmaßnahmen sind aber gleichermaßen denkbar. Wenn der Pumpenhalter 5 abdichtend in dem Pumpenhalterungsabschnitt 21 an einem Ende des Pumpengehäuses 2 aufgenommen ist, befindet sich der Pumpeneinlass 30 im Bereich des Pumpengehäuses 2 mit dem Reaktoreinlass 1a.

Wie **Fig. 4** zeigt, ist der Pumpenhalter 5 in dem Pumpengehäuse 2 axial fixiert, beispielsweise mittels Schrauben (nicht abgebildet), die in radialer Richtung eingebracht sind. In dieser Position ist der Pumpenhalter 5 etwas von dem Rand des Pumpengehäuses 2 zurückgesetzt, sodass ein Flanschabschnitt 60 des Strahlerhalters 5 bei Anordnung an dem Pumpenhalter 5 bündig mit Pumpengehäuse 2 abschließt. Der Strahlerhalter 6, der beispielsweise ebenfalls aus einem Stahlmaterial gefertigt sein kann, ist über seinen Flanschabschnitt 60 mit dem Pumpenhalter 5 verbunden. Dazu können beispielsweise in axialparalleler Richtung eingeschraubte Senkschrauben (nicht abgebildet), z. B. zylindrische Innensechskantschrauben verwendet werden, die mit selbstschneidenden Gewindeeinsätzen (nicht abgebildet) in Eingriff treten, die in den Kunststoff Pumpenhalter 5 eingebracht sind.

Von dem Flanschabschnitt 60 des Strahlerhalters 6 sind ein Stutzenabschnitt 62 zur Befestigung des Strahlergehäuses 13 und ein Anschlusssockel 63 für den UV-Strahler 10 jeweils koaxial und radial abgesetzt ausgebildet. An dem Stutzenabschnitt 62 wird das Strahlergehäuse 13 befestigt, indem der Stutzenabschnitt 62 in dem Verbindungsende 130 des Strahlergehäuses 13 aufgenommen wird und durch radial eingebrachte Schrauben (nicht abgebildet) verbunden wird. Damit sind das Pumpengehäuse 2 und das Strahlergehäuse 13 über den Pumpenhalter 5 und den Strahlerhalter 6 verbunden.

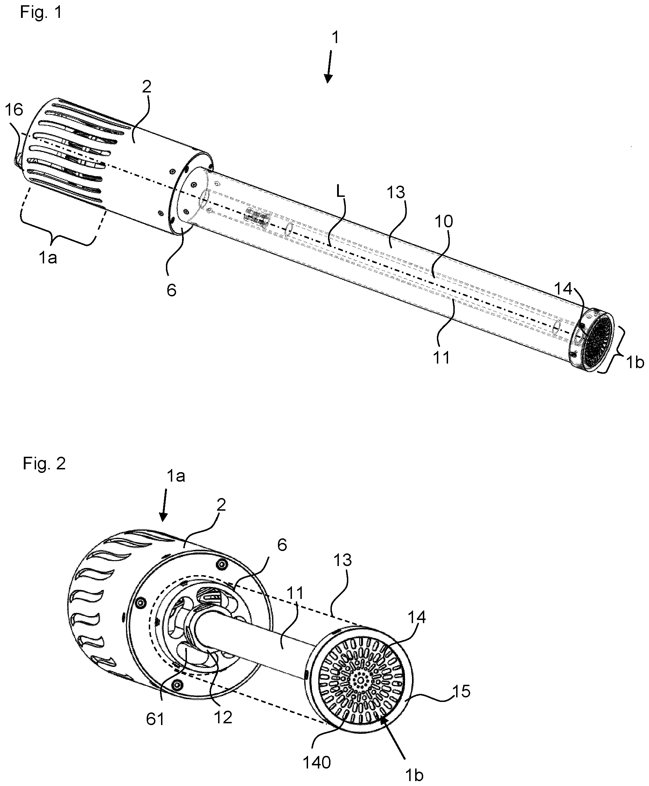

Stromaufwärts der Pumpe 3 verläuft der Strömungspfad von dem Reaktoreinlass 1a zu dem Pumpeneinlass 30. Der Reaktoreinlass 1a wird durch mehrere umfänglich verteilte, wellenförmige Einlassschlitze 20 gebildet, von denen der Übersichtlichkeit wegen in **Fig. 6** nur einer bezeichnet ist. Stromabwärts der Pumpe 3 verläuft der Strömungspfad von dem hohlzylindrischen Halteabschnitt 50, in dem der Pumpenauslass 31 aufgenommen ist, durch eine Durchtrittsöffnung 51, die sich durch den Pumpenhalter 5 erstreckt. Die zur Längsachse L koaxiale Durchtrittsöffnung 51 ist kegelstumpfförmig und verjüngt sich von dem Halteabschnitt 50 zu dem Strahlerhalter 6 hin, wobei der Durchmesser des exzentrischen Pumpenauslasses 31 kleiner ist als der Durchmesser der Durchtrittsöffnung 51 an dem Halteabschnitt 50. Die Durchtrittsöffnung 51 im Pumpenhalter 5 ist zur Fortsetzung des Strömungspfads mit Durchtrittsöffnungen 61 verbunden, die in dem Strahlerhalter 6 ausgebildet sind. Im vorliegenden Beispiel erstrecken sich vier Durchtrittsöffnungen 61 um den Anschlusssockel 63 durch den Stutzenabschnitt 62, sodass sie in das Strahlergehäuse 13 rings um das Tauchrohr 11 münden, wie z. B. in **Fig. 2** erkennbar ist, in der das Strahlergehäuse 13 nur gestrichelt dargestellt ist.

Dort ist auch der Reaktorauslass 1b am Austrittsende 131 des Strahlergehäuses 13 gut zu sehen, der stirnseitig durch eine mehrere Auslassöffnungen 140 in einem Deckeleinsatz 14 bereitgestellt wird. Die Auslassöffnungen 140 sind hinsichtlich ihrer Größe und Anordnung dazu ausgebildet sind, die aus dem Strahlergehäuse 13 austretende Strömung zu regulieren, insbesondere zu vereinheitlichen, verbreitern und/oder verlangsamen. Da das geschlossene Ende 111 des einseitig geschlossenen Tauchrohrs 11 im Strahlergehäuse 13 vor dessen Austrittsende 131 endet und von dem Deckeleinsatz 14 beabstandet ist, wie **Fig. 4** zeigt, verteilten sich die rund oder länglich geformten Auslassöffnungen 140, wie in **Fig. 2** zu sehen, ausgehend von einer zentralen runden Öffnung in radialer Richtung und rotationssymmetrisch, wobei die Größe der Auslassöffnungen mit zunehmendem Abstand zur zentralen Öffnung zunimmt.

Das offene Ende 110 des Tauchrohrs 11 ist in dem Anschlusssockel 63 der Strahlerhalterung 6 aufgenommen, wobei der Anschlusssockel 63 dazu eine Aufnahmebohrung 64 umgibt, zu sehen in **Fig. 4** **und** **6****.** Für die Befestigung des Tauchrohrs 11 an dem Strahlerhalter 6 sorgt ein Befestigungselement 12, das in Eingriff mit dem Anschlusssockel 63 steht. In dem vorliegenden Beispiel weist der Anschlusssockel 63 dazu ein Außengewinde zum Eingriff mit einer Schraubmutter 12 als Befestigungselement 12 auf. Die Aufnahmebohrung 64 erstreckt sich durch den Strahlerhalter 6 und ist, wie in **Fig. 4** zu sehen, auf der zu dem Pumpenhalter 5 weisenden Seite durch eine Anschlussvorrichtung 16' verschlossen. Diese stellt die wasserdichte Durchführung einer Anschlussleitung 17` (gestrichelt dargestellt) in das Tauchrohr 11 für den elektrischen und kommunikativen Anschluss des UV-Strahlers 10 mittels eines Anschlusssteckers 9 bereit.

In die andere Richtung erstreckt sich die Anschlussleitung 17' von der Anschlussvorrichtung 16' an dem Strahlerhalter 6 durch die Durchtrittsöffnung 51 und durch eine Leitungsdurchführung 52 in dem Pumpenhalter 5. Die Anschlussleitung 17' erstreckt sich abgedichtet durch die Leitungsdurchführung 52, die neben dem Halteabschnitt 50 ausgebildet ist, in den Reaktoreinlassbereich des Pumpengehäuses 2. Dort erstreckt sie sich zu einer weiteren abgedichtete Anschlussvorrichtung 16' an der Abdeckkappe 22, die mit dem Pumpengehäuse 2 verschweißt ist und dieses stirnseitig verschließt, wie in **Fig. 4** zu sehen ist. Eine weitere abgedichtete Anschlussvorrichtung 16 an der Abdeckkappe 22 ist für eine weitere, in **Fig. 4** nicht abgebildete Anschlussleitung 17 zum elektrischen und kommunikativen Anschluss der Pumpe 3 vorgesehen. Diese erstreckt sich lediglich im Reaktoreinlassbereich des Pumpengehäuses 2. Als Anschlussvorrichtungen 16, 16' kommen beispielsweise Kabelverschraubungen in Frage.

Die wasserdichten Anschlussleitungen 17, 17' sorgen für die elektrische Versorgung und Ansteuerung der Pumpe 3 und des UV-Strahlers 10 durch die Verbindung mit einer Steuerungseinheit 18, die, wie in **Fig. 3** skizziert, außerhalb des Wasserbehälters 101 der Vorrichtung 100 angeordnet ist. Die Steuerungseinheit 18 umfasst ein elektronisches Vorschaltgerät 18' für den UV-Strahler 10 und kann selbstverständlich weitere Steuerungsgeräte und Module für den Betrieb des UV-Strahlers 10 und der Pumpe 3 aufweisen. Diese können besonders vorteilhaft zum Betrieb mit Schutzkleinspannung ausgebildet sein; d. h. anstatt mit 230 V Versorgungsspannung werden der UV-Strahler 10, die Pumpe 3 und hier auch das Vorschaltgerät 18` mit einer Wechselspannung von höchstens 50 V, beispielsweise 24 V betrieben. Ferner werden auch die nicht betriebsmäßig unter Spannung stehenden, leitfähigen Bauteile wie z. B. das Pumpengehäuse 2 geerdet, sodass bei Fehlerströmen durch eine Fehlerstrom-Schutzeinrichtung gegen Erde die Spannung abgeschaltet werden kann. Der UV-Wasserentkeimungsreaktor 1 weist dazu vorliegend, wie in **Fig. 4** zu sehen, einen über einen Außenleiter (nicht abgebildet) mit dem Erdpotential verbundenen Erdungsbolzen 23 auf der Innenseite der Abdeckkappe 22 auf. Dies bedeutet einen verbesserten Schutz vor elektrischem Schlag bei einem Defekt der elektrischen Anschlüsse oder Leitungen.

Ferner kann die Steuerungseinheit 18 einen Timer aufweisen, der nach Ablauf einer vorbestimmten Betriebsdauer an einen Austausch des UV-Strahlers 10 erinnert. Ferner kann die Steuerungseinheit 18 mit einem oder mehreren Sensoren zur Erfassung von Betriebsparametern kommunikativ verbunden sein, um die Pumpe 3 und/oder den UV-Strahler 10 in Abhängigkeit des erfassten Betriebsparameters anzusteuern. Die Vorrichtung 100 in **Fig. 3** wird mit einem Füllstandsensor 19 betrieben, der im Wasserbehälter 101 angebracht ist und über eine drahtlose oder verdrahtete Kommunikationsleitung 19` mit der Steuerungseinheit 18 verbunden ist. So kann beispielsweise je nach Füllstand des Wassers W in dem Wasserbehälter 101 die Leistung beim Betrieb des UV-Wasserentkeimungsreaktors 1 erhöht oder verringert werden. Als Füllstandssensor 19 kann beispielsweise ein optischer Sensor verwendet werden, der an der Decke des Wasserbehälters 101 montiert wird.

Weitere Sensoren, die zum Betrieb des UV-Wasserentkeimungsreaktors 1 eingesetzt werden können, sind beispielsweise ein UV-Sensor 190 zur Erfassung der UV-Strahlungsleistung des UV-Strahlers 10 und ein Temperatursensor 191 zur Erfassung der Wassertemperatur.

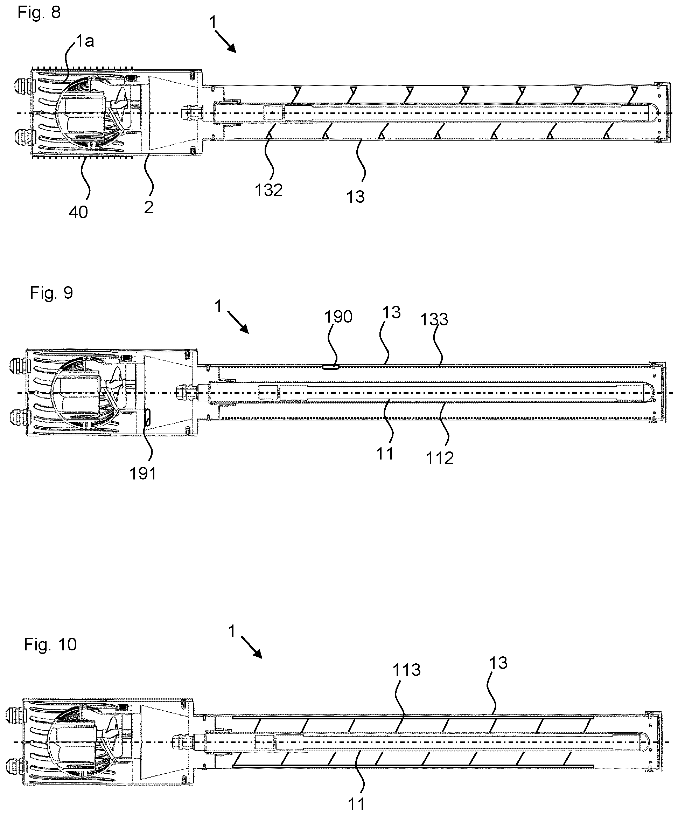

Wie in **Fig. 9** gezeigt ist, kann ein UV-Sensor 190 in dem Strahlergehäuse 13 angeordnet sein, das dafür eine entsprechende Öffnung aufweisen kann. Eine verdrahtete Kommunikationsleitung zu der Steuerungseinheit 18 könnte dann alternativ zu einer im inneren UV-Wasserentkeimungsreaktors 1 geführten Leitung auch außen am UV-Wasserentkeimungsreaktors 1 geführt werden.

Selbstverständlich ist es alternativ auch möglich, dass ein UV-Sensor innerhalb des Strahlergehäuses ohne Öffnung angeordnet wird.

Der Temperatursensor 191 in **Fig.9** ist in der Durchtrittsöffnung 51 des Pumpenhalters 5 angeordnet, sodass eine verdrahtete Kommunikationsleitung mit der Anschlussleitung 17' des UV-Strahlers 10 durch die Leitungsdurchführung 52 gelegt werden kann. Alternativ zur verdrahteten Kommunikationsleitung können der UV-Sensor 190 und der Temperatursensor 191 auch drahtlos mit der Steuerungseinheit 18 kommunizieren. Selbstverständlich können der UV-Sensor 190 und der Temperatursensor 191 auch an anderen geeigneten Stellen des Entkeimungsreaktors 1 platziert werden. Durch Messung der UV-Strahlungsleistung kann die Pumpenleistung entsprechend abgestimmt werden, damit das während der Verweilzeit im Strahlungsgehäuse 13 bestrahlte Wasservolumen die für die Entkeimung erforderliche Strahlungsdosis erhält. Durch die Messung der Wassertemperatur kann der Betrieb des UV-Strahlers 10 an die Wassertemperatur angepasst und die emittierte UVC-Bestrahlungsleistung durch Anpassung der Stromstärke optimiert werden.

Weitere mögliche Ausführungsformen des UV-Wasserentkeimungsreaktors 1 sind in **Fig. 8 bis 10** gezeigt, wobei die einzelnen Modifikationen - wie die vorbeschriebenen Sensoren, nicht zwangsläufig in der dargestellten Kombination eingesetzt werden müssen, sondern auch einzeln oder in anderen Kombinationen miteinander in einem UV-Wasserentkeimungsreaktors 1 realisiert sein können.

In **Fig. 8** ist der UV-Wasserentkeimungsreaktor 1 mit einem wendelförmig gewundenen Leitblech als Strömungsleitelement 132 an der Innenseite des Strahlergehäuses 13 ausgestattet, um die Turbulenz und die Verweilzeit in dem Strahlergehäuse 13 für eine verbesserte Durchmischung und für eine verlängerte Bestrahlung zu erhöhen. Gegebenenfalls ist es alternativ oder zusätzlich auch möglich, auch wenn dafür kein Beispiel abgebildet ist, dass die sich verjüngende Durchtrittsöffnung 51 sowie die Durchtrittsöffnungen 61 mit zusätzlichen Strömungsleitelementen zur Erhöhung der Turbulenz in dem Strahlergehäuse 13 modifiziert werden. Weitere alternative oder zusätzliche Strömungsleitelemente können an der Außenseite des Tauchrohrs 11 ausgebildet sein, oder lose in dem Ringvolumen zwischen der Innenseite des Strahlergehäuses 13 und der Außenseite des Tauchrohrs 11 angeordnet sein. Außerdem zeigt **Fig. 8** einen Partikelfilter 40, der hier einfach schematisch außen an dem Reaktoreinlass 1a dargestellt ist.

Grundsätzlich kann ein Partikelfilter aber auch an anderer Stelle stromaufwärts der Pumpe, z. B. am Pumpeneinlass, installiert werden.

**Fig. 9** zeigt ferner eine Splitterschutzbeschichtung 112 aus einem für die UVC-Strahlung transparenten Material um das Tauchrohr 11, das als Bruchsicherung zur Verhinderung von Glassplittern im Wasser dient. Eine Reflektorbeschichtung 133 an der Innenseite des Strahlergehäuses 13 sorgt für eine Reflexion der UV-Strahlung und verhindert das Austreten der UV-Strahlung durch das Strahlergehäuse 13, insbesondere wenn dieses nicht aus einem reflektierenden Material, sondern aus einem Material besteht, das ggf. in Abhängigkeit der Wandstärke für die UV-Strahlung zumindest teilweise transparent sein kann. Dies ist beispielsweise bei manchen Kunststoffen der Fall. Ist das Strahlergehäuse 13 aus einem Material wie Metall, z. B. Edelstahl, gefertigt, entsteht eine reflektierende Oberfläche durch eine entsprechende Bearbeitung der Innenseite des Strahlergehäuses 13. Es existieren allerdings auch pigmentierte Kunststoffe, die bei entsprechender Oberflächenbearbeitung UV-Strahlung reflektieren können. Je nach Einsatz des UV-Wasserentkeimungsreaktors 1 können die Materialien der Komponenten variiert werden: Zur Trinkwasserdesinfektion weist der UV-Wasserentkeimungsreaktor 1 trinkwasserkompatible Materialen auf, zur Prozesswasserdesinfektion in der Halbleiterindustrie wird der UV-Wasserentkeimungsreaktor 1 metallfrei ausgebildet.

In den in **Fig. 10** dargestellten UV-Wasserentkeimungsreaktor 1 ist in dem Strahlergehäuse 13 eine mechanische Wischvorrichtung 113 integriert, um die Außenseite des Tauchrohrs 11 zu reinigen, ohne den UV-Wasserentkeimungsreaktor 1 aus dem Wasserbehälter 101 nehmen und auseinander bauen zu müssen. Die Wischvorrichtung 113 wird im dargestellten Beispiel durch ein wendelförmiges Wischblatt gebildet, das an einem Träger befestigt ist, der sich in dem Strahlergehäuse 13 hin und her bewegen kann. Dies kann durch wechselnde Strömungsrichtung einer Pumpe 3 bewirkt werden, deren Drehrichtung geändert werden kann.

### BEZUGSZEICHENLISTE

- 1: UV-Wasserentkeimungsreaktor
- 1a, b: Reaktoreinlass, -auslass
- 2: Pumpengehäuse
- 3: Pumpe
- 4: Schlauchschelle
- 5: Pumpenhalter
- 6: Strahlerhalter
- 7: Dichtung
- 8: O-Ring
- 9: Anschlussstecker
- 10: UV-Strahlungsquelle
- 11: Tauchrohr
- 12: Befestigungselement/Mutter
- 13: Strahlergehäuse
- 14: Deckeleinsatz
- 15: Deckelhalter
- 16, 16`: Anschlussvorrichtung
- 17, 17': Anschlussleitung
- 18, 18': Steuerungseinheit, Vorschaltgerät
- 19, 19': Füllstandssensor, Kommunikationsverbindung
- 20: Einlassschlitz
- 21: Pumpenhalterungsabschnitt
- 22: Abdeckkappe
- 23: Erdungsbolzen
- 30: Pumpeneinlass
- 31: Pumpenauslass
- 40: Partikelfilter
- 50: Halteabschnitt/Befestigungskragen
- 51: Durchtrittsöffnung
- 52: Leitungsdurchführung
- 53: Gewindeeinsatz
- 60: Flanschabschnitt
- 61: Durchtrittsöffnung
- 62: Stutzenabschnitt
- 63: Anschlusssockel
- 64: Aufnahmebohrung
- 110: Offenes Ende
- 111: Geschlossenes Ende
- 112: Splitterschutzbeschichtung
- 113: Wischvorrichtung
- 130: Verbindungsende
- 131: Austrittsende
- 132: Strömungsleitelement
- 133: Reflektorbeschichtung
- 140: Auslassöffnung
- 190: UV-Sensor
- 191: Temperatursensor
- 100: Vorrichtung zur Wasserdesinfektion
- 101: Wasserbehälter

- L: Längsachse
- W: Wasser

## Patentansprüche

1. UV-Wasserentkeimungsreaktor (1), ausgebildet zur Anordnung in einem Wasserbehälter (101), wobei der UV-Wasserentkeimungsreaktor (1) ein längliches, für die UV-Strahlung undurchlässiges Reaktorgehäuse mit einem Reaktoreinlass (1a) und einem Reaktorauslass (1b) und in dem Reaktorgehäuse eine Pumpe (3) und einen UV-Strahler (10) aufweist, der UV-Strahlung in einem UVC-Wellenlängenbereich emittiert, **dadurch gekennzeichnet, dass**
das Reaktorgehäuse entlang seiner Längsachse (L) durch ein Pumpengehäuse (2), das den Reaktoreinlass (1a) aufweist, und ein Strahlergehäuse (13), das den Reaktorauslass (1b) aufweist, gebildet wird, wobei die Pumpe (3) in dem Pumpengehäuse (2) und der UV-Strahler (10) in dem Strahlergehäuse (13) angeordnet ist, und der UV-Wasserentkeimungsreaktor (1) einen Pumpenhalter (5) und einen Strahlerhalter (6) aufweist, wobei
der Pumpenhalter (5) abdichtend in dem Pumpengehäuse (2) angeordnet ist und einen Halteabschnitt (50) aufweist, an dem die Pumpe (3) mit ihrem Pumpenauslass (31) befestigt ist und der den Pumpenauslass (31) mit einer Durchtrittsöffnung (51) verbindet, die sich durch den Pumpenhalter (5) von dem Halteabschnitt (50) mit verjüngendem Querschnitt erstreckt, und
der Strahlerhalter (6) mit dem Pumpenhalter (5) und dem Strahlergehäuse (13) verbunden ist, und einen Anschlusssockel (63) für den UV-Strahler (10) und zumindest eine Durchtrittsöffnung (61) aufweist, die mit der Durchtrittsöffnung (51) des Pumpenhalters (5) in Verbindung steht,
wobei die Pumpe (3) und der UV-Strahler (10) zum Betrieb mit Schutzkleinspannung ausgebildet sind.

2. UV-Wasserentkeimungsreaktor (1) nach Anspruch 1,
**dadurch gekennzeichnet, dass**
der Reaktoreinlass (1a), der mit einem Pumpeneinlass (30) der Pumpe (3) in Verbindung steht, durch mehrere umfänglich verteilte Einlassschlitze (20) gebildet wird, die an dem Pumpengehäuse (2) neben einem Pumpenhalterabschnitt (21) ausgebildet sind, in dem der Pumpenhalter (5) abdichtend aufgenommen ist, wobei das Pumpengehäuse (2) stirnseitig durch eine Abdeckkappe (22) verschlossen ist, die zumindest eine Anschlussvorrichtung (16, 16`) aufweist, die mit zumindest einer Anschlussleitung (17, 17`) verbunden ist, die einen elektrischen und kommunikativen Anschluss der Pumpe (3) und des UV-Strahlers (10) mit zumindest eine Steuerungseinheit (18) bereitstellt.

3. UV-Wasserentkeimungsreaktor (1) nach Anspruch 1 oder 2,
**dadurch gekennzeichnet, dass**
der Pumpenhalter (5) neben dem Halteabschnitt (50) eine Leitungsdurchführung (52) aufweist, durch die sich abdichtend eine Anschlussleitung (17`) für den elektrischen und kommunikativen Anschluss des UV-Strahlers (10) erstreckt, und
der Anschlusssockel (63) eine Aufnahmebohrung (64) umgibt, die sich durch den Strahlerhalter (6) erstreckt und auf der zu dem Pumpenhalter (5) weisenden Seite durch eine Anschlussvorrichtung (16`) verschlossen ist, die mit der Anschlussleitung (17`) für den elektrischen und kommunikativen Anschluss des UV-Strahlers (10) verbunden ist.

4. UV-Wasserentkeimungsreaktor (1) nach zumindest einem der Ansprüche 1 bis 3, **dadurch gekennzeichnet, dass**
der Strahlerhalter (6) zur Verbindung mit dem Pumpenhalter (5) einen Flanschabschnitt (60) und zur Verbindung mit dem Strahlergehäuse (13) einen Stutzenabschnitt (62) aufweist, der von dem Flanschabschnitt (60) abgesetzt ist, wobei der Anschlusssockel (63) an dem Stutzenabschnitt (62) abgesetzt ausgebildet ist und die zumindest eine Durchtrittsöffnung (61) sich durch den Stutzenabschnitt (62) er streckt.

5. UV-Wasserentkeimungsreaktor (1) nach Anspruch 3 oder 4,
**dadurch gekennzeichnet, dass**
der UV-Strahler (10) in einem einseitig geschlossenen Tauchrohr (11) aus einem für die UVC-Strahlung durchlässigen Material angeordnet ist, wobei ein offenes Ende (110) des Tauchrohrs (11) in die Aufnahmebohrung (64) aufgenommen ist und das Tauchrohr (11) durch ein mit dem Anschlusssockel (63) eingreifendes Befestigungselement (12) an dem Strahlerhalter (6) befestigt ist.

6. UV-Wasserentkeimungsreaktor (1) nach zumindest einem der Ansprüche 1 bis 5, **dadurch gekennzeichnet, dass**
der Reaktorauslass (1b) stirnseitig durch eine Mehrzahl von Auslassöffnungen (140) an einem von dem Strahlerhalter (6) abgewandten Austrittsende (131) des Strahlergehäuses (13) gebildet wird, wobei die Auslassöffnungen (140) hinsichtlich ihrer Grö-ße und Anordnung dazu ausgebildet sind, eine durch den Reaktorauslass (1b) austretende Strömung zu regulieren.

7. UV-Wasserentkeimungsreaktor (1) nach zumindest einem der Ansprüche 1 bis 6, **dadurch gekennzeichnet, dass**
der UV-Wasserentkeimungsreaktor (1)
- zur Erhöhung der Turbulenz und/oder der Verweilzeit in dem Strahlergehäuse (13) zusätzlich zumindest ein Strömungsleitelement (132) aufweist, und/oder
- stromaufwärts der Pumpe (3) und des UV-Strahlers (10) einen Partikelfilter (40) aufweist.

8. Wasserentkeimungsreaktor (1) nach zumindest einem der Ansprüche 1 bis 7,
**dadurch gekennzeichnet, dass**
das Strahlergehäuse (13) aus einem reflektierenden Material besteht oder an seiner Innenseite eine Reflektorbeschichtung (133) aufweist,
wobei ein UV-Wasserentkeimungsreaktor (1), der zur Trinkwasserdesinfektion ausgebildet ist, trinkwasserkompatible Materialen aufweist, und ein UV-Wasserentkeimungsreaktor, zur Prozesswasserdesinfektion in der Halbleiterindustrie ausgebildet ist, metallfrei ausgebildet ist.

9. UV-Wasserentkeimungsreaktor (1) nach zumindest einem der Ansprüche 5 bis 8, **dadurch gekennzeichnet, dass**
das Tauchrohr (11) eine Splitterschutzbeschichtung (112) oder Splitterschutzhülle aus einem für die UVC-Strahlung transparenten Material aufweist,
und/oder
in dem Strahlergehäuse (13) eine mechanische Wischvorrichtung (113) integriert ist, die zur Reinigung einer Außenseite des Tauchrohrs (11) ausgebildet ist.

10. UV-Wasserentkeimungsreaktor (1) nach zumindest einem der Ansprüche 1 bis 9, **dadurch gekennzeichnet, dass**
der UV-Strahler (10), der eine Mindestdosis von 250 J/m² bereitstellt, eine Amalgamlampe, Niederdruck-Quecksilberdampflampe, oder ein Lampenmodul mit einer Mehrzahl LEDs ist.

11. UV-Wasserentkeimungsreaktor (1) nach zumindest einem der Ansprüche 2 bis 10, **dadurch gekennzeichnet, dass**
die Steuerungseinheit (18) einen Timer aufweist, der dazu ausgebildet ist, nach Ablauf einer vorbestimmten Betriebsdauer an einen Austausch des UV-Strahlers (10) zu erinnern, und/oder dass
die Steuerungseinheit (18) mit zumindest einem Sensor zur Erfassung eines Betriebsparameters kommunikativ verbunden ist und dazu ausgebildet ist, einen Betrieb der Pumpe (3) und/oder des UV-Strahlers (10) in Abhängigkeit des erfassten Betriebsparameters anzupassen, wobei der Sensor aus einer Gruppe ausgewählt ist, die zumindest einen Füllstandsensor (19) zur Erfassung eines Füllstands in dem Wasserbehälter (101), einen UV-Sensor (190) zur Erfassung einer UV-Strahlungsleistung des UV-Strahlers (10) und einen Temperatursensor (191) zur Erfassung der Wassertemperatur umfasst, wobei
- der Füllstandsensor (19) dazu ausgebildet ist, in dem Wasserbehälter (101) getrennt von dem Reaktorgehäuse angeordnet zu werden,
- der UV-Sensor (190) in dem Strahlergehäuse (13) angeordnet ist, und
- der Temperatursensor (191) in oder an dem Reaktorgehäuse vorliegt.

12. Vorrichtung (100) zur Wasserdesinfektion mit ultravioletter (UV-)Strahlung, wobei die Vorrichtung (100) einen Wasserbehälter (101) und zumindest einen darin angeordneten UV-Wasserentkeimungsreaktor (1) aufweist, der ein längliches, für die UV-Strahlung undurchlässiges Reaktorgehäuse mit einem Reaktoreinlass (1a) und einem Reaktorauslass (1b) und in dem Reaktorgehäuse eine Pumpe (3) und einen UV-Strahler (10) aufweist, der UV-Strahlung in einem UVC-Wellenlängenbereich emittiert, wobei eine Steuerungseinheit (18), die mit der Pumpe (3) und dem UV-Strahler (10) verbunden ist, außerhalb des Wasserbehälters (101) angeordnet ist, **dadurch gekennzeichnet, dass**
der UV-Wasserentkeimungsreaktor (1) ein UV-Wasserentkeimungsreaktor (1) nach zumindest einem der Ansprüche 1 bis 11 ist.
